# EUROPÄISCHE PATENTSCHRIFT

(11) **EP 1 073 512 B1**
(45) Veröffentlichungstag und Bekanntmachung des Hinweises auf die Patenterteilung: **14.05.2003**
(21) Anmeldenummer: 00903526.2
(22) Anmeldetag: 13.01.2000
(51) Int. Cl.: B01J 2/06, B01J 13/04

(54) **VERFAHREN UND VORRICHTUNG ZUR HERSTELLUNG VON FESTEN TEILCHEN AUS EINEM FLÜSSIGEN MEDIUM**
METHOD AND DEVICE FOR PRODUCING SOLID PARTICLES FROM A LIQUID MEDIUM
PROCEDE ET DISPOSITIF DE FABRICATION DE PARTICULES SOLIDES A PARTIR D'UN MILIEU LIQUIDE

(30) Priorität: 17.02.1999 DE 19906509
(43) Veröffentlichungstag der Anmeldung: 07.02.2001
(73) Patentinhaber: Vorlop, Klaus-Dieter, 38102 Braunschweig (DE)
(72) Erfinder: VORLOP, Klaus-Dieter, D-38102 Braunschweig (DE); PRÜSSE, Ulf, D-38118 Braunschweig (DE); BREFORD, Jürgen, D-38116 Braunschweig (DE)
(74) Vertreter: Lins, Edgar, Dipl.-Phys. Dr.jur.
(86) Internationale Anmeldenummer: DE0000097
(87) Internationale Veröffentlichungsnummer: WO00048722

(56) Entgegenhaltungen:
- DE-A- 4 424 998
- DE-C- 19 755 353
- US-A- 1 671 683

## Beschreibung

Die Erfindung betrifft ein Verfahren zur Herstellung von festen Teilchen aus einem flüssigen Medium, bei dem das flüssige Medium zu einem Flüssigkeitsstrahl geformt und in definierte Abschnitte so zerteilt wird, dass sich die Abschnitte in die Richtung des Flüssigkeitsstrahls weiterbewegen und in eine die Aushärtung bewirkenden Umgebung gelangen und so die festen Teilchen bilden.

Die Erfindung betrifft ferner eine Vorrichtung zur Herstellung von festen Teilchen aus einem flüssigen Medium, mit einer Düse, aus der das flüssige Medium als zusammenhängender Flüssigkeitsstrahl austritt, mit einer in einer Schneidebene kontinuierlich in einer Richtung bewegten Teileinrichtung zur Herstellung definierter Abschnitte des Flüssigkeitsstrahls und mit einem in Richtung des Flüssigkeitsstrahls angeordneten Auffangbehälter, der einer Härtungseinrichtung für die Abschnitte des Flüssigkeitsstrahls zugeordnet ist.

Die Herstellung von festen Teilchen aus einem flüssigen Medium wird in zahlreichen Anwendungsfällen angestrebt. Ein bedeutsames Anwendungsgebiet besteht in der Verkapselung von chemisch oder biologisch aktiven Materialien in meist kugelförmigen Teilchen, in denen die chemische oder biologische Aktivität des Materials erhalten bleibt, das Material jedoch aufgrund der Einkapselung kontrolliert einsetzbar und rückholbar, beispielsweise aus einer Flüssigkeit, gehandhabt werden kann. Als flüssiges Medium, das mit einem Härtungsmedium zur Ausbildung von kugelförmigen Teilchen geeignet ist, kommen ionisch vernetzende Gele, thermisch vernetzende Gele, Polymere enthaltende Flüssigkeiten und ähnliche Systeme in Frage. Ionisch vernetzende Gele sind beispielsweise Natriumalginat, das in einem Kalziumionen aufweisenden Bad sofort aushärtet, das mit Kalium oder Kalziumionen aushärtende Carrageenan usw. Ein thermisch vernetzendes Gel ist beispielsweise Agar Agar, das bei stärkerer Temperaturabsenkung aushärtet, sodass die die Aushärtung bewirkende Umgebung in flüssiger oder in Gasform lediglich eine geringere Temperatur aufweisen muß. Bei anderen Systemen findet eine Vernetzung bei höheren Temperaturen statt, sodass lediglich Tropfen beispielsweise in einem Fallturm zur Aushärtung auf eine höhere Temperatur gebracht werden müssen. Bekannt ist ferner die Verwendung von Monomerflüssigkeiten, die zusammen mit einem Monomer in einer Härtungsflüssigkeit polymerisieren oder durch das Härtungsmedium zu einer Homopolymerisation angeregt werden. Bekannt ist ferner eine Aushärtung durch UV-Strahlen.

Die Herstellung der Portionen des flüssigen Mediums in einfacher Weise durch kontrolliertes Austropfen aus einer Düse erlaubt wegen der geringen Durchsatzmengen keine kommerzielle Anwendung in der Produktion. Darüber hinaus kann eine relativ große minimale Tropfengröße nicht unterschritten werden.

Aus der DE 38 36 894 A1 ist es bekannt, eine größere Anzahl von Düsen an einem gemeinsamen Düsenträger anzubringen, der durch einen Vibrator in Schwingungen versetzt wird, sodass eine frühere Tropfenablösung von der Düse bewirkt wird. Auf diese Weise ist die Herstellung kleinerer Tropfen möglich. Bei den Vibrationsverfahren ist die minimal erzielbare Tropfengröße - und damit Perlengröße - abhängig von der Viskosität und der Oberflächenspannung des flüssigen Mediums. Eine etwaige wünschenswerte Verkleinerung der im wesentlichen kugelförmigen Teilchen ist damit jedenfalls für höherviskose Medien nicht erreichbar. Ferner ist der Durchsatz des flüssigen Mediums durch die Düsen begrenzt, wenn nicht ein erheblicher Aufwand mit einer Vielzahl von Düsenöffnungen in Kauf genommen wird.

Eine dramatische Verbesserung für die Herstellung von festen Teilchen aus einem flüssigen Medium ergibt sich durch die eingangs erwähnte Vorrichtung, die aus der DE 44 24 998 A1 bekannt ist. Bei dieser Vorrichtung wird ein voller Flüssigkeitsstrahl ausgebildet, der anschließend durch eine schnell bewegte, vorzugsweise rotierende Teilvorrichtung in regelmäßige Abschnitte unterteilt wird. Befindet sich die Härtungseinrichtung mit einem gewissen Abstand von der Teileinrichtung, bilden die Abschnitte aufgrund der Oberflächenspannung des flüssigen Mediums im wesentlichen kugelförmige Tröpfchen aus, so daß nach der Aushärtung kugelförmige Perlen entstehen. Da nicht mehr auf eine natürliche Tropfenbildung zurückgegriffen wird, sondern die Tropfenbildung durch die Teileinrichtung aufgezwungen wird, ist ein hoher Materialdurchsatz und darüber hinaus die Einstellung jeder beliebigen Tropfengröße möglich.

Eine weitere Optimierung der Produktivität einer derartigen Vorrichtung könnte darin bestehen, die Flüssigkeit aus mehreren Düsen in mehreren Flüssigkeitsstrahlen auslaufen zu lassen und durch die allen Düsen gemeinsame Teileinrichtung zu teilen und in einer gemeinsamen Härtungseinrichtung auszuhärten und gemeinsam aufzufangen.

Durch die Verwendung einer schnell bewegten Teileinrichtung wird aus dem Flüssigkeitsstrahl ein im wesentlichen der Dicke der Teileinrichtung, beispielsweise eines rotierenden Drahtes, entsprechender Zwischenabschnitt herausgeschlagen. Das herausgeschlagene Material bildet somit einen Schneidoder Spritzverlust, der für eine verbesserte Produktivität der Vorrichtung minimiert werden sollte. Untersuchungen haben ergeben, daß der Schneid- oder Spritzverlust bei einer lotrecht stehenden Düse und einer eine waagerechte Schneidebene aufweisenden Teileinrichtung relativ hoch ist. Da sich die Flüssigkeit in dem Flüssigkeitsstrahl während des Schneidvorgangs, also dem Durchwandern des Flüssigkeitsstrahlquerschnitts, merklich fortbewegt, entspricht der aus dem Flüssigkeitsstrahl herausgeschlagene Zwischenabschnitt nicht einem rechtwinklig zylindrischen Strahlabschnitt, sondern einem zylindrischen Strahlabschnitt mit schrägen Stirnflächen, wodurch das Volumen des herausgeschlagenen Zwischenabschnitts deutlich vergrößert wird. Es ist daher vorgeschlagen worden, die Schneidebene der Teileinrichtung entsprechend der Fließgeschwindigkeit des Flüssigkeitsstrahls schräg zu stellen, um so zu einem resultierenden rechtwinkligen Schnitt durch den Flüssigkeitsstrahl zu gelangen. Eine derartige Anordnung ist aber nicht ohne weiteres bei einer Vielzahl von vertikal stehenden Düsen realisierbar, die beispielsweise auf einem gemeinsamen Radius angeordnet sind, da der jeweils benötigte Winkel nur auf einer Stelle des in einer schrägen Ebene umlaufenden Schneidelements der Teileinrichtung eingestellt werden kann.

Der Erfindung liegt die Problemstellung zugrunde, eine Vorrichtung der eingangs erwähnten Art hinsichtlich des erzielbaren Flüssigkeitsdurchsatzes und der damit produzierbaren festen Teilchen sowie bezüglich der Reduzierung der Schneid- oder Spritzverluste zu verbessern.

Ausgehend von dieser Problemstellung ist für ein Verfahren der eingangs erwähnten Art dadurch gekennzeichnet, dass mehrere Flüssigkeitsstrahlen gebildet werden, die in gleicher Bewegungsrichtung zerteilt werden und dass jeder der Flüssigkeitsstrahlen mit der Bewegungsrichtung einen spitzen Winkel bildet.

Entsprechend ist eine Vorrichtung der eingangs erwähnten Art erfindungsgemäß dadurch gekennzeichnet, dass eine Mehrzahl von Düsen vorgesehen ist unterhalb derer eine gemeinsame Teileinrichtung angeordnet ist und daß die Düsen in bezug auf die Bewegungsrichtung so geneigt angeordnet sind, dass jeder der aus den Düsen austretenden Flüssigkeitsstrahlen mit der Bewegungsrichtung der Teileinrichtung einen spitzen Winkel bildet.

In Abkehr von den bekannten gattungsgemäßen Systemen, bei denen die Düsen immer in der Lotrechten ausgerichtet waren, sodass sich ein gerade fallender Flüssigkeitsstrahl ausgebildet hat, sind die erfindungsgemäßen Düsen zur Lotrechten geneigt angeordnet. Dadurch ist es möglich, dass der resultierende Schneideweg der Teileinrichtug durch die Flüssigkeitsstrahlen senkrecht zur Längsrichtung des Flüssigkeitsstrahls in der Schneidebene verläuft, wobei alle Düsen einen gleichen Abstand von der Schneidebene aufweisen können.

Da der optimale Winkel zwischen Flüssigkeitsstrahl und Bewegungsrichtung jedenfalls von der Strömungsgeschwindigkeit des Flüssigkeitsstrahls abhängt, ist es zweckmäßig, wenn die Neigung der Düsen einstellbar ist.

Um einen minimalen Zwischenabschnitt zur Trennung der definierten Abschnitte des Flüssigkeitsstrahls zu entfernen, können die Düsen in der senkrecht zur Bewegungsrichtung der Teileinrichtung verlaufenden Richtung senkrecht zur Schneidebene ausgerichtet sein.

Besonders bevorzugt ist es, wenn die Teileinrichtung rotierend bewegbar ist und die Düsen auf einem gleichen Radius bezüglich der Rotationsachse angeordnet sind. Die Bewegungsrichtung, in der sich die Teileinrichtung kontinuierlich bewegt, ist somit eine Kreisbahn und für jeden Schnitt durch einen Flüssigkeitsstrahl durch die betreffende Tangente an der Kreisbahn definiert. Alternativ hierzu können auch Schneidelemente der Teileinrichtung im wesentlichen translatorisch bewegt werden, beispielsweise als eingespannte Drähte eines umlaufenden Förderers, wobei nur dessen Obertrum oder Untertrum für den Schneidvorgang ausgenutzt wird.

Die erfindungsgemäße Vorrichtung kann zweckmäßigerweise in einem dichten Gehäuse untergebracht sein, sodass die Gesamtanordnung auch sterilisierbar und steril abgedichtet ausgebildet sein kann, um etwaigen Anforderungen an eine besonders reine und ggfs. sterile Fertigung gerecht zu werden. Es ist daher ohne weiteres möglich, die cGMP-FDA-Anforderungen zu erfüllen.

Bei der erfindungsgemäßen Vorrichtung kann es zweckmäßig sein, einen Teil der Düsen, also wenigstens eine Düse, als Reinigungsdüse auszubilden, die mit einer Reinigungsflüssigkeit gespeist wird. Die Reinigungsflüssigkeit verhindert Verkrustungen an den Schneidwerkzeugen und kann so beschaffen sein, daß der Aushärtungsvorgang auch bei Anwendung einer aushärtenden Flüssigkeit nicht gestört wird.

Die Erfindung soll im folgenden anhand von in der Zeichnung dargestellten Ausführungsbeispielen näher erläutert werden.
Es zeigen:
- Figur 1 -: eine schematische Seitenansicht eines Teils der erfindungsgemäßen Vorrichtung mit Düsen und Teileinrichtung;
- Figur 2 -: eine schematische Draufsicht auf die Anordnung gemäß Figur 1;
- Figur 3 -: eine schematische Darstellung einer erfindungsgemäßen Gesamtvorrichtung, die in einem Gehäuse zur Ermöglichug einer sterilen Fertigung untergebracht ist;
- Figur 4 -: eine schematische Darstellung gemäß Figur 3 mit einer modifizierten Auffang- und Härtungseinrichtung.

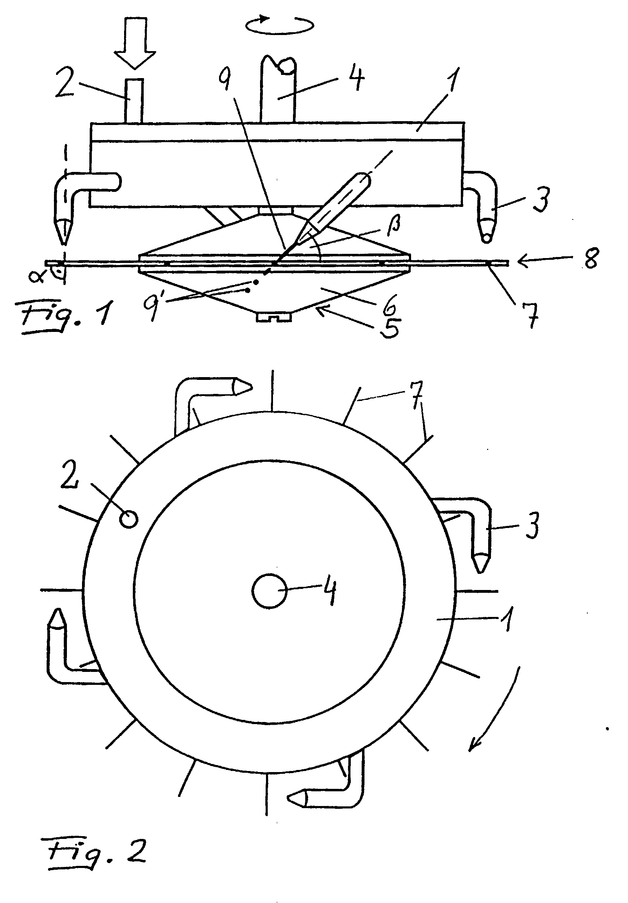

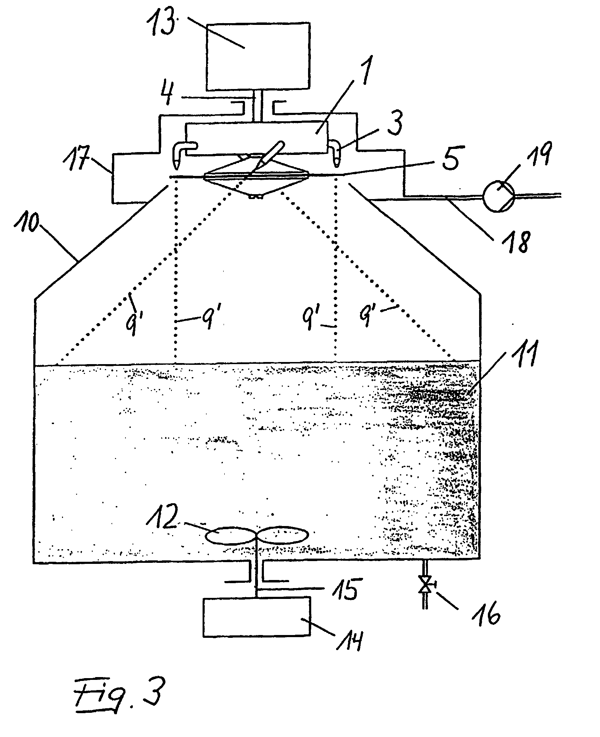

Die Figuren 1 und 2 lassen schematisch einen Vorratsbehälter 1 für ein flüssiges Medium erkennen, der über einen Zuführungsanschluß 2 mit dem flüssigen Medium befüllbar ist. Der Vorratsbehälter 1 ist als im Querschnitt kreisförmiger Zylinder ausgebildet. An seinen zylindrischen Mantelflächen sind vier Düsen 3 angesetzt, die einen abgewinkelten Düsenkörper aufweisen und sich zunächst in radialer Richtung des Zylinders des Vorratsbehälters 1 erstrecken und dann nach schräg unten abgewinkelt sind. Die Düsen 3 sind spezielle Vollstrahldüsen, die die Ausbildung eines vollen Flüssigkeitsstrahls über eine gewisse Mindestlänge gewährleisten.

Der Vorratsbehälter 1 weist eine zentrische Durchführungsöffnung für eine Antriebswelle 4 auf, die einen Teileinrichtung 5 rotierend antreibt, und zwar von der Antriebswelle 4 aus gesehen im Uhrzeigersinn. Die Teileinrichtung 5 besteht aus einem rotierenden Mittelkörper 6, in dem dünne Drähte 7 eingespannt sind, die sich bei einer schnellen Rotation des Mittelkörpers 6 aufgrund der Zentrifugalkraft in einer horizontalen Schneidebene 8 nach radial außen aufrichten und so Schneidelemente in der horizontalen Schneidebene 8 bilden oder aufgrund der Eigenstabilität oder einer zusätzlichen Einspannung in radialer Richtung stehen.

Die Düsen 3 sind senkrecht zur Bewegungsrichtung (Tangentenrichtung), also in Durchmesserrichtung des Bewegungskreises der Drähte 7 senkrecht ausgerichtet wie dies in Figur 1 durch den eingezeichneten rechten Winkel α verdeutlicht ist. Mit der Bewegungsrichtung, also der Tangente der Kreisbewegung bilden die Düsen jeweils einen spitzen Winkel β, der im dargestellten Ausführungsbeispiel bei etwa 45° liegt. Die Größe des Winkels β, die benötigt wird, um einen minimalen Schneidweg der Drähte 7 durch den aus den Düsen 3 austretenden Flüssigkeitsstrahl 9 - und damit ein minimales Zwischenabschnittsvolumen durch den Schneidvorgang zu realisieren, hängt von der Strömungsgeschwindigkeit in dem Flüssigkeitsstrahl 9 ab, sodass es zweckmäßig ist, den Winkel β der Düsen 3 einstellbar zu machen, um die Vorrichtung an verschiedene flüssige Medien anpassen zu können.

Figur 2 läßt noch erkennen, dass die Düsen 3 in der Draufsicht tangential zu dem Bewegungskreis der Drähte 7 gerichtet sind, was zur Minimierung des Schneidvolumens in dem Flüssigkeitsstrahl 9 zweckmäßig ist.

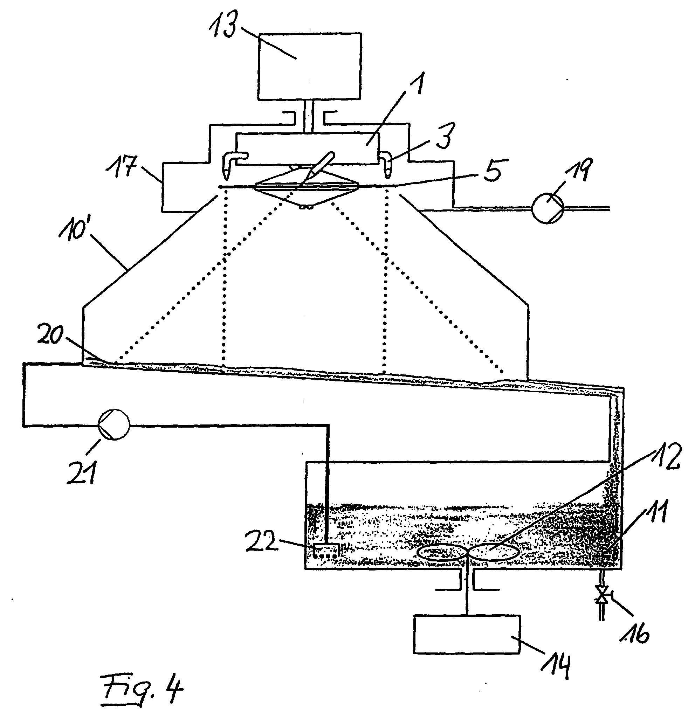

Figur 3 zeigt, daß der Vorratsbehälter 1 mit den Düsen und die Teileinrichtung 5 in einem gemeinsamen Gehäuse 10 untergebracht sind, das zugleich als Auffangeinrichtung für die durch die Teileinrichtung 5 geteilten Flüssigkeitsstrahlen 9' dient und hierfür mit einer Reaktionsflüssigkeit 11 gefüllt ist, die eine Aushärtung der aufgrund der Oberflächenspannung zu einer Tropfenform umgeformten Abschnitte der Flüssigkeitsstrahlen 9' führt. Am Boden des Behälters 10 befindet sich eine Rühreinrichtung 12. Außerhalb des Gehäuses 10 sind ein Antriebsmotor 13 für die Teileinrichtung 5 und ein Antriebsmotor 14 angeordnet. Der Antriebsmotor 14 ist über eine Antriebswelle 15 mit der Rührein-richtung 12 verbunden. Die Antriebswellen 4 und 15 sind abgedichtet durch die entsprechende Wandung des Gehäuses 10 hindurchgeführt.

Am Boden des Behälters 10 befindet sich ein Ablaßventil 16 über das die Reaktionsflüssigkeit 11 und die ausgehärteten Teilchen entnommen werden können.

Radial von der Teileinrichtung 5 ist ein Gehäuseansatz 17 vorgesehen, in den die aus den Flüssigkeitsstrahlen 9 durch die Teileinrichtung 5 herausgeschlagenen Zwischenabschnitte geschleudert werden. Das Material der Zwischenabschnitte 5 sammelt sich in einer unteren Ablaßleitung 18 und wird durch eine Pumpe 19 in den Vorratsbehälter 1 zurückgeführt.

Bei dem in Figur 4 dargestellten Ausführungsbeispiel ist der Behälter 10' mit einem schräg gerichteten Boden 20 versehen, der über eine Umwälzpumpe 21 mit einer Flüssigkeitsschicht der Reaktionsflüssigkeit 11 versehen wird, sodass die Aushärtung der Teilchen bereits auf dem schrägen Boden 20 erfolgt. Am Ende des schrägen Bodens 20 besteht eine Fallstrecke in die Reaktionsflüssigkeit 11, sodass die gebildeten ausgehärteten Teilchen in der Reaktionslösung 11 nachhärten können. Ein Siebfilter 22 in einer Ansaugleitung der Umwälzpumpe 21 verhindert ein Ansaugen von ausgehärteten Teilchen zur Umwälzpumpe 21. Der schräge Boden 20 bewirkt, dass die Abschnitte 9' nach Ausbildung eines Tropfens in der Reaktionsflüssigkeit 11 auf dem schrägen Boden 20 aushärten und sofort über die Fallstrecke abtransportiert werden. Dadurch wird verhindert, dass nachfolgende Abschnitte 9' auf in der Reaktionslösung 11 schwimmende, bereits teilweise ausgehärtete Teilchen treffen und so eine Mehrzahl von zusammenklebenden Teilchen bilden.

Die erfindungsgemäße Vorrichtung ermöglicht den Einsatz einer Vielzahl von Düsen 3, wobei die Vielzahl deutlich größer als die dargestellten vier Düsen 3 sein kann. Auf diese Weise läßt sich die Herstellung ausgehärteter Teilchen hocheffizient ausführen, wobei nur eine einzige Teileinrichtung 5 und eine einzige Auffangeinrichtung (Behälter 10, 10') und Härtungseinrichtung (Reaktionslösung 11) benötigt wird. Durch die schräg gestellten Düsen 3 wird die Wirkungsgradverminderung durch Schneid- oder Spritzverluste minimierbar. Die Verminderung der Schneid- oder Spritzverluste durch die erfindungsgemäßen schräg gestellten Düsen 3 ist anhand eines Versuchsbeispiels belegt worden.

Eine Lösung aus 12 g Polyvinylalkohol (PVAL 10-98), 10 g Glyzerin und 90 g Wasser ist als Versuchslösung benutzt worden. Die verwendete Apparatur sah einen Durchmesser der Öffnung der Düsen 3 von 0,3 mm und einen Durchmesser der Drähte 7 der Teileinrichtung 5 von 400 µm vor. Die Anzahl der Drähte betrug 48. Der Mittelkörper 6 rotierte mit einer Umdrehungszahl von 6000 UpM und der Abstand des Flüssigkeitsstrahls 9 von der Antriebswelle 4 betrug 32 mm. Das Geschwindigkeitsverhältnis der Rotationsgeschwindigkeit der Drähte und der Strömungsgeschwindigkeit der Flüssigkeit betrug 1.

Bei einer herkömmlich lotrecht gestellten Düse und einer waagerechten Schneidebene 8 betrugen die Schneid- oder Spritzverluste 27 %. Demgegenüber beliefen sich die Verluste bei um 45° geneigten Düsen 3 entsprechend der vorliegenden Erfindung nur noch 12 %. Der Durchmesser der gebildeten Perlen betrug 0,5 mm.

Die mit der erfindungsgemäßen Vorrichtung bevorzugt herstellbaren Teilchendurchmesser liegen zwischen 0,5 und 1,5 mm. Für diese Teilchendurchmesser läßt sich ein besonders wirtschaftlicher Durchsatz der Flüssigkeitsstrahlen 9 erreichen.

In den dargestellten Ausführungsbeispielen ist die Teileinrichtung 5 aus einem rotierenden Mittelkörper 6 und von diesem Mittelkörper 6 ausgehenden dünnen Drähten 7 gebildet. Die dünnen Drähte 7 können dabei an ihren in der Zeichnung frei dargestellten Enden nochmals mit einem Außenring miteinander verbunden sein, der die Anordnung der Drähte 7 stabilisiert.

Die Anordnung der Düsen 3, die in den dargestellten Ausführungsbeispielen vertikal ausgerichtet sind, kann auch mit einer horizontalen Ausrichtung erfolgen, sodass die Flüssigkeitsstrahlen 9 beispielsweise horizontal die Düsen 3 verlassen. In diesem Fall kann die Teileinrichtung 5 auch durch vertikal stehende Drähte gebildet sein, die zwischen einem oberen und einen unteren Ring eingespannt sind, wobei die Schneidebene der Drähte durch eine zylindrische Mantelfläche gebildet ist und die Flüssigkeitsstrahlen 9 zu der Tangente der Mantelfläche im Schnittpunkt den spitzen Winkel β ausbilden.

Die erfindungsgemäße Vorrichtung eignet sich auch für die Bearbeitung von Schmelzen als flüssiges Medium, die durch Abkühlen aushärten.

## Patentansprüche

1. Verfahren zur Herstellung von festen Teilchen aus einem flüssigen Medium, bei dem das flüssige Medium zu einem Flüssigkeitsstrahl (9) geformt und in definierte Abschnitte (9') so zerteilt wird, dass sich die Abschnitte (9') in die Richtung des Flüssigkeitsstrahls (9) weiterbewegen und in eine die Aushärtung bewirkenden Umgebung gelangen und so die festen Teilchen bilden, **dadurch gekennzeichnet, dass** mehrere Flüssigkeitsstrahlen (9) gebildet werden, die in gleicher Bewegungsrichtung zerteilt werden und dass jeder der Flüssigkeitsstrahlen (9) mit der Bewegungsrichtung einen spitzen Winkel (β) bildet.

2. Verfahren nach Anspruch 1, **dadurch gekennzeichnet, dass** der Neigungswinkel (β) der Flüssigkeitsstrahlen (9) in bezug auf deren eingestellte Durchflußgeschwindigkeit so eingestellt wird, dass der resultierende Schneidweg durch die Flüssigkeitsstrahl (9) senkrecht zur Längsrichtung des Flüssigkeitsstrahls (9) verläuft.

3. Verfahren nach Anspruch 1 oder 2, **dadurch gekennzeichnet, dass** die Flüssigkeitsstrahlen in der senkrecht zur Bewegungsrichtung der Teileinrichtung (5) verlaufenden Richtung senkrecht zur Schneidebene (8) ausgerichtet sind, in der die Bewegungsrichtungen verlaufen.

4. Verfahren nach einem der Ansprüche 1 bis 3, **dadurch gekennzeichnet, dass** die Bewegungsrichtungen für die Teileinrichtung (5) auf einer Kreisbahn liegen.

5. Vorrichtung zur Herstellung von festen Teilchen aus einem flüssigen Medium, mit einer Düse (3) aus der das flüssige Medium als zusammenhängender Flüssigkeitsstrahl (9) austritt, mit einer in einer Schneidebene (8) kontinuierlich in einer Richtung bewegten Teileinrichtung (5) zur Herstellung definierter Abschnitte (9') des Flüssigkeitsstrahls (9) und mit einem in Richtung des Flüssigkeitsstrahls (9) angeordneten Auffangbehälter (10, 10'), der einer Härtungseinrichtung (11) für die Abschnitte (9') des Flüssigkeitsstrahls (9) zugeordnet ist, **dadurch gekennzeichnet, dass** eine Mehrzahl von Düsen (3) vorgesehen ist, unterhalb derer eine gemeinsame Teileinrichtung (5) angeordnet ist und dass die Düsen (3) in bezug auf die Bewegungsrichtung so geneigt angeordnet sind, dass jeder der aus den Düsen (3) austretenden Flüssigkeitsstrahlen (9) mit der Bewegungsrichtung der Teileinrichtung (5) einen spitzen Winkel (β) bildet.

6. Vorrichtung nach Anspruch 5, **dadurch gekennzeichnet, dass** der Neigungswinkel (β) der Düsen (3) so in bezug auf eine eingestellte Durchflußgeschwindigkeit des Flüssigkeitsstrahls (9) eingestellt ist, dass der resultierende Schneidweg durch den Flüssigkeitsstrahl (9) senkrecht zur Längsrichtung des Flüssigkeitsstrahls (9) in der Schneidebene (8) verläuft.

7. Vorrichtung nach Anspruch 5 oder 6, **dadurch gekennzeichnet, dass** die Neigung der Düsen (3) einstellbar ist.

8. Vorrichtung nach einem der Ansprüche 5 bis 7, **dadurch gekennzeichnet, dass** die Düsen (3) in der senkrecht zur Bewegungsrichtung der Teileinrichtung (5) verlaufenden Richtung senkrecht zur Schneidebene (8) ausgerichtet sind.

9. Vorrichtung nach einem der Ansprüche 5 bis 8, **dadurch gekennzeichnet, dass** die Teileinrichtung (5) rotierend bewegbar ist und dass die Düsen (3) auf einen gleichen Radius bezüglich der Rotationsachse (4) angeordnet sind.

10. Vorrichtung nach einem der Ansprüche 6 bis 9, **dadurch gekennzeichnet, dass** die Düsen (3) einen gleichen Abstand zur Schneidebene (8) aufweisen.

11. Vorrichtung nach einem der Ansprüche 5 bis 10, **dadurch gekennzeichnet, dass** die Schneidebene (8) waagerecht angeordnet ist.

12. Vorrichtung nach einem der Ansprüche 5 bis 11, **dadurch gekennzeichnet, dass** die Düsen (3) als abgewinkelte radiale Ansätze des zentral angeordneten Vorratsbehälters 1 ausgebildet sind.

13. Vorrichtung nach einem der Ansprüche 5 bis 12, **dadurch gekennzeichnet, dass** Vorratsbehälter (1), Teileinrichtung (5), Härtungseinrichtung (11) und Auffangbehälter (10, 10') in einem dichten Gehäuse (10, 10') untergebracht sind.

14. Vorrichtung nach Anspruch 13, **dadurch gekennzeichnet, dass** das Gehäuse (10, 10') sterilisierbar und steril abdichtbar ausgebildet ist.

## Claims

1. Method for producing solid particles from a liquid medium, in which the liquid medium is formed into a liquid jet (9) and divided up into defined portions (9') in such a way that the portions (9') continue in the direction of the liquid jet (9) and reach an environment inducing curing and thus form the solid particles, **characterized in that** a number of liquid jets (9) are formed and divided up in the same direction of movement and **in that** each of the liquid jets (9) forms an acute angle (β) with the direction of movement.

2. Method according to Claim 1, **characterized in that** the angle of inclination (β) of the liquid jets (9) is set with respect to their set throughflow rate such that the resultant cutting path through the liquid jet (9) runs perpendicularly with respect to the longitudinal direction of the liquid jet (9).

3. Method according to Claim 1 or 2, **characterized in that** the liquid jets are aligned in the direction running perpendicularly with respect to the direction of movement of the dividing means (5), perpendicularly with respect to the cutting plane (8) in which the directions of movement run.

4. Method according to one of Claims 1 to 3, **characterized in that** the directions of movement for the dividing means (5) lie on a circular path.

5. Device for producing solid particles from a liquid medium, with a nozzle (3) from which the liquid medium emerges as a continuous liquid jet (9), with a dividing means (5) for producing defined portions (9') of the liquid jet (9), which is moved continuously in a direction in a cutting plane (8), and with a collecting container (10, 10'), which is arranged in the direction of the liquid jet (9) and is assigned a hardening means (11) for the portions (9') of the liquid jet (9), **characterized in that** a plurality of nozzles (3) are provided, underneath which a common dividing means (5) is arranged, and **in that** the nozzles (3) are arranged such that they are inclined with respect to the direction of movement in such a way that each of the liquid jets (9) emerging from the nozzles (3) forms an acute angle (β) with the direction of movement of the dividing means (5).

6. Device according to Claim 5, **characterized in that** the angle of inclination (β) of the nozzles (3) is set with respect to a set throughflow rate of the liquid jet (9) such that the resultant cutting path through the liquid jet (9) runs perpendicularly with respect to the longitudinal direction of the liquid jet (9) in the cutting plane (8).

7. Device according to Claim 5 or 6, **characterized in that** the inclination of the nozzles (3) is adjustable.

8. Device according to one of Claims 5 to 7, **characterized in that** the nozzles (3) are aligned in the direction running perpendicularly with respect to the direction of movement of the dividing means (5), perpendicularly with respect to the cutting plane (8).

9. Device according to one of Claims 5 to 8, **characterized in that** the dividing means (5) is rotatingly movable and **in that** the nozzles (3) are arranged on the same radius with respect to the axis of rotation (4).

10. Device according to one of Claims 6 to 9, **characterized in that** the nozzles (3) are at the same distance from the cutting plane (8).

11. Device according to one of Claims 5 to 10, **characterized in that** the cutting plane (8) is arranged horizontally.

12. Device according to one of Claims 5 to 11, **characterized in that** the nozzles (3) are formed as angled-away radial attachments of the centrally arranged storage container 1.

13. Device according to one of Claims 5 to 12, **characterized in that** the storage container (1), dividing means (5), hardening means (11) and collecting container (10, 10') are accommodated in a sealed housing (10, 10').

14. Device according to Claim 13, **characterized in that** the housing (10, 10') is formed such that it is sterilizable and can be sealed in a sterile state.

## Revendications

1. Procédé pour fabriquer des particules solides à partir d'un milieu liquide, dans lequel le milieu liquide est conformé en un jet liquide (9) et est fractionné en parties définies (9') de telle façon que les parties (9') poursuivent leur mouvement (9) dans la direction du jet liquide et parviennent dans un environnement effectuant le durcissement et constituent ainsi les particules solides, **caractérisé en ce qu'**on constitue plusieurs jets liquides (9) qui sont fractionnés dans la même direction de mouvement, et **en ce que** chacun des jets liquides (9) forme un angle aigu (β) avec la direction de mouvement.

2. Procédé selon la revendication 1, **caractérisé en ce qu'**on règle l'angle d'inclinaison (β) des jets liquides (9) par rapport à leur vitesse d'écoulement elle-même réglée, de telle façon que le trajet de coupe qui en résulte à travers le jet liquide (9) s'étend perpendiculairement à la direction longitudinale du jet liquide (9) .

3. Procédé selon la revendication 1 ou 2, **caractérisé en ce que** dans la direction s'étendant perpendiculairement à la direction de déplacement du dispositif de fractionnement (5) les jets liquides sont dirigés perpendiculairement au plan de coupe (8) dans lequel s'étendent les directions de déplacement.

4. Procédé selon l'une des revendications 1 à 3, **caractérisé en ce que** les directions de déplacement pour le dispositif de fractionnement (5) s'étendent sur une trajectoire circulaire.

5. Dispositif pour fabriquer des particules solides à partir d'un milieu liquide, comprenant une buse (3) dont le milieu liquide sort sous la forme d'un jet liquide d'un seul tenant (9), un dispositif de fractionnement (5) déplacé en continu dans une direction dans un plan de coupe (8) pour produire des parties définies (9') du jet liquide (9), et un réservoir de collecte (10, 10') agencé dans la direction du jet liquide (9), et auquel est associé un dispositif de durcissement (11) pour les parties (9') du jet liquide (9), **caractérisé en ce qu'**il est prévu plusieurs buses (3) en-dessous desquelles est agencé un dispositif de fractionnement commun (5), et **en ce que** les buses sont agencées inclinées par rapport à la direction de mouvement de telle manière que chacun des jets liquides (9) sortant des buses (3) forme un angle aigu (β) avec la direction de mouvement du dispositif de fractionnement (5).

6. Dispositif selon la revendication 5, **caractérisé en ce que** l'angle d'inclinaison (β) des buses (3) est réglé par rapport à une vitesse d'écoulement réglée du jet liquide de telle façon que le trajet de coupe qui en résulte à travers le jet liquide (9) s'étend perpendiculairement à la direction longitudinale du jet liquide (9) dans le plan de coupe (8).

7. Dispositif selon la revendication 5 ou 6, **caractérisé en ce que** l'inclinaison des buses (3) est réglable.

8. Dispositif selon l'une des revendications 5 à 7, **caractérisé en ce que** les buses (3) sont orientées perpendiculairement au plan de coupe (8) dans la direction s'étendant perpendiculairement à la direction de mouvement du dispositif de fractionnement (5).

9. Dispositif selon l'une des revendications 5 à 8, **caractérisé en ce que** le dispositif de fractionnement (5) est mobile en rotation, et **en ce que** les buses (3) sont agencées sur un même rayon relativement à l'axe de rotation (4).

10. Dispositif selon l'une des revendications 6 à 9, **caractérisé en ce que** les buses (3) présentent une même distance par rapport au plan de coupe (8).

11. Dispositif selon l'une des revendications 5 à 10, **caractérisé en ce que** le plan de coupe (8) est agencé horizontal.

12. Dispositif selon l'une des revendications 5 à 11, **caractérisé en ce que** les buses (3) forment des appendices radiaux coudés du réservoir d'alimentation (1) agencé de façon centrale.

13. Dispositif selon l'une des revendications 5 à 12, **caractérisé en ce que** le réservoir d'alimentation (1), le dispositif de fractionnement (5), le dispositif de durcissement (11) et le réservoir de collecte (10, 10') sont logés dans un carter étanche (10, 10').

14. Dispositif selon la revendication 13, **caractérisé en ce que** le carter (10, 10') est réalisé stérilisable et capable de fermeture étanche stérile.
